# DEMANDE DE BREVET EUROPEEN

(11) **EP 2 325 059 A1**
(43) Date de publication de la demande: **25.05.2011**
(21) Numéro de dépôt: 10306275.8
(22) Date de dépôt: 19.11.2010
(51) Int. Cl.: B60R 19/52, B29C 45/17

(54) **Calandre, notamment pour véhicule automobile, à fonction esthétique améliorée**

(30) Priorité: 24.11.2009 FR 0958307
(71) Demandeur: Faurecia Bloc Avant, 92000 Nanterre (FR)
(72) Inventeur: Duquesnoy, David, 25400, ARBOUANS (FR); Simon, Stéphane, 90000, BEFORT (FR)
(74) Mandataire: Blot, Philippe Robert Emile

(57) **Abrégé**

La calandre (10) comporte un cadre (12) délimitant une ouverture (14) de passage d'air, et une grille (16) comprenant des premier (18) et second (20) ensembles de barreaux s'entrecroisant dans l'ouverture de passage d'air (14). Les barreaux du premier ensemble (18) sont réalisés en un premier matériau, et les barreaux du second ensemble (20) sont réalisés en un second matériau différent du premier matériau.

## Description

La présente invention concerne une calandre, notamment destinée à équiper un bouclier avant de véhicule automobile.

On connaît déjà dans l'état de la technique, notamment d'après DE 102 38 445, une calandre, notamment pour bouclier avant de véhicule automobile, du type comportant un cadre structurel délimitant une ouverture de passage d'air, et une grille comprenant des premier et second ensembles de barreaux s'entrecroisant dans l'ouverture de passage d'air.

Une telle calandre est destinée à être portée par le véhicule automobile, en avant d'un radiateur de ce véhicule automobile, de façon à autoriser le passage d'air destiné au refroidissement de ce radiateur, tout en participant à l'aspect esthétique général du véhicule.

Dans certains cas, notamment pour des raisons d'esthétique, on prévoit une calandre présentant deux couleurs différentes.

A cet effet, on applique des peintures de couleurs différentes sur des parties distinctes de la calandre. La réalisation de ces peintures est généralement contraignante et coûteuse, imposant notamment le marouflage d'une partie de la calandre lorsque l'autre partie est peinte.

L'invention a notamment pour but de remédier à cet inconvénient en fournissant une calandre pouvant présenter deux couleurs différentes sans nécessiter d'étapes contraignantes d'application de peintures.

A cet effet, l'invention a pour objet une calandre, notamment pour véhicule automobile, du type comportant un cadre délimitant une ouverture de passage d'air, et une grille comprenant des premier et second ensembles de barreaux s'entrecroisant dans l'ouverture de passage d'air, caractérisée en ce que les barreaux du premier ensemble sont réalisés en un premier matériau, et les barreaux du second ensemble sont réalisés en un second matériau différent du premier matériau.

Dans la présente demande, on considérera que deux matériaux sont différents s'ils présentent des caractéristiques différentes.

En particulier, les premier et second matériaux différents peuvent présenter des caractéristiques d'aspects différentes, par exemple des caractéristiques de couleurs différentes, ce qui permet d'obtenir une calandre présentant deux couleurs différentes, sans qu'il soit nécessaire d'appliquer de peinture.

De préférence, une calandre selon l'invention peut comporter une ou plusieurs des caractéristiques suivantes, prises seules ou selon toutes les combinaisons possibles :
- les premier et second matériaux différent notamment en ce qu'ils comportent des pigments de couleurs différentes,
- le cadre est réalisé dans le premier ou le second matériau, ce cadre étant de préférence venu de matière avec les barreaux du premier ou second ensemble,
- les barreaux de l'un parmi les premier et second ensembles sont sensiblement horizontaux, et les barreaux de l'autre parmi les premier et second ensembles sont sensiblement verticaux,
- au moins un barreau du premier ou du second ensemble comporte au moins une alvéole,
- les barreaux des premier et second ensembles sont co-moulés, et
- les barreaux du second ensemble sont rapportés sur les barreaux du premier ensemble.

L'invention concerne également un procédé de fabrication d'une calandre, notamment pour véhicule automobile, du type comportant un cadre structurel délimitant une ouverture de passage d'air, et une grille comprenant des premier et second ensembles de barreaux s'entrecroisant dans l'ouverture de passage d'air, caractérisé en ce qu'il comporte une première étape de moulage des barreaux du premier ensemble, par injection, dans un premier moule, d'un premier matériau différent d'un second matériau dans lequel sont réalisés et les barreaux du second ensemble.

De préférence, le procédé de fabrication comporte l'une ou plusieurs des caractéristiques suivantes, prises seules ou selon toutes les combinaisons possibles :
- le cadre et les barreaux du premier ensemble sont réalisés dans le même matériau, au cours de la première étape de moulage par injection,
- le procédé comporte une seconde étape de surmoulage du second matériau sur les barreaux du premier ensemble de façon à former les barreaux du second ensemble, et
- le procédé comporte une étape de moulage des barreaux du second ensemble, par injection, dans un second moule, du second matériau, et une étape d'assemblage des barreaux des premier et second ensembles, par exemple par encliquetage, vissage ou soudage.

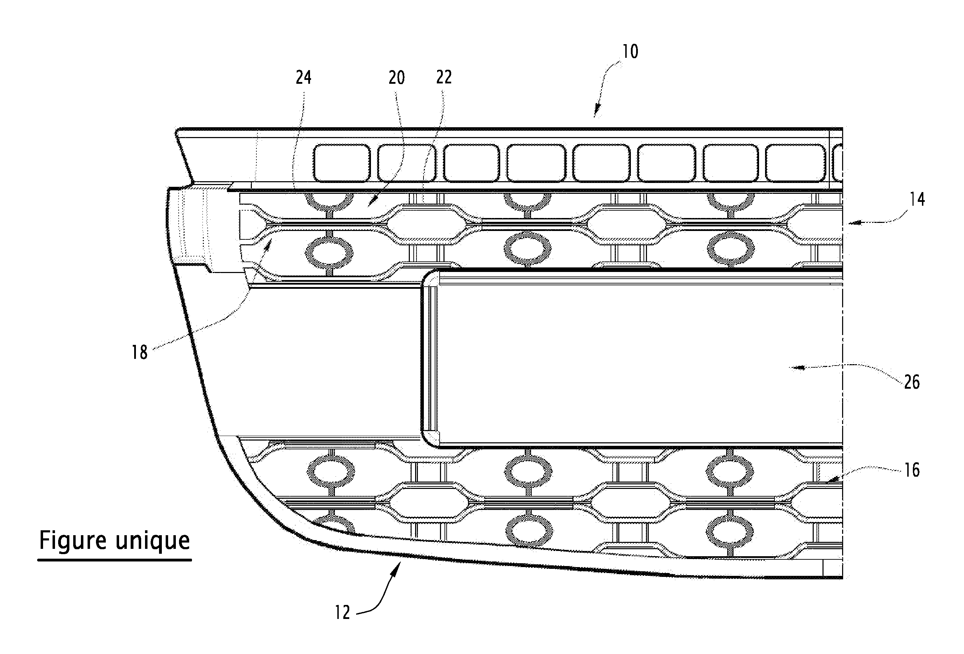

L'invention sera mieux comprise à la lecture de la description qui va suivre, donnée uniquement à titre d'exemple et faite en se référant à la figure unique annexée, représentant une vue partielle de face d'une calandre selon un exemple de mode de réalisation de l'invention.

On a représenté sur la figure unique une calandre 10 selon un exemple de mode de réalisation de l'invention. La calandre 10 est destinée à équiper un bouclier avant (non représenté) de véhicule automobile, de façon à être agencée en avant d'un radiateur (non représenté) de ce véhicule automobile, par exemple un radiateur d'un circuit de refroidissement d'un moteur, ou un radiateur d'un système de climatisation du véhicule.

La calandre 10 comporte un cadre 12 structurel délimitant une ouverture 14 de passage d'air, ainsi qu'une grille 16 agencée dans l'ouverture 14 de passage d'air, reliée au cadre 12.

La grille 16 comprend des premier 18 et second 20 ensembles de barreaux s'entrecroisant dans l'ouverture de passage d'air 14. Par exemple, les barreaux du premier ensemble 18 sont sensiblement horizontaux et les barreaux du second ensemble 20 sont sensiblement verticaux.

De manière optionnelle, la calandre 10 comporte également un élément de support 26, pouvant porter une plaque minéralogique.

Conformément à l'exemple de mode de réalisation décrit, les barreaux du premier ensemble 18 comportent chacun des premières alvéoles 22, et les barreaux du second ensemble 20 comportent chacun des deuxièmes alvéoles 24. Ces alvéoles 22, 24 ont essentiellement une fonction esthétique mais pourraient également présenter une fonction de renfort de la calandre 10.

Les barreaux de premier ensemble 18 sont réalisés en un premier matériau, et les barreaux du second ensemble 20 sont réalisés en un second matériau différent du premier matériau. De préférence, les premier et second matériaux sont des thermoplastiques.

Pour des raisons esthétiques, les premier et second matériaux comportent avantageusement des pigments de couleurs différentes.

Conformément au mode de réalisation décrit, le cadre 12 est réalisé dans le premier matériau, ce cadre 12 étant venu de matière avec les barreaux du premier ensemble 18, de façon à former avec ces barreaux une pièce unique. Conformément à une variante de réalisation non représentée, le cadre 12 est réalisé dans le second matériau et est venu de matière avec les barreaux du second ensemble 20.

On notera que les barreaux du second ensemble 20 peuvent être assemblés avec les barreaux du premier ensemble 18 de toutes les manières envisageables.

Par exemple, les barreaux des premier 18 et second 20 ensembles sont co-moulés. A cet effet, les premier et second matériaux doivent être aptes à s'accrocher l'un à l'autre lors du co-moulage. De tels matériaux sont dits chimiquement compatibles.

A cet effet, le procédé de fabrication de la calandre 10 comporte une première étape de moulage des barreaux du premier ensemble 18 et du cadre 12 par injection du premier matériau dans un premier moule.

Puis, au cours d'une seconde étape de moulage des barreaux du second ensemble, on surmoule le second matériau sur la pièce formée par le cadre 12 et les barreaux du premier ensemble 18, de façon à former les barreaux du second ensemble 20.

Conformément à un deuxième exemple, les barreaux du second ensemble 20 pourraient être rapportés sur les barreaux du premier ensemble 18. Dans ce cas, en plus de la première étape de moulage par injection définie précédemment, le procédé de fabrication de la calandre 10 comporte une étape de moulage des barreaux du second ensemble 20, par injection du second matériau dans un second moule séparément des barreaux du premier ensemble 18. Le procédé comporte ensuite une étape d'assemblage des barreaux des premier 18 et second 20 ensembles ainsi réalisés, par exemple par encliquetage, vissage ou soudage.

On notera que l'invention n'est pas limitée au mode de réalisation précédemment décrit, mais pourrait présenter diverses variantes sans sortir du cadre des revendications.

Par exemple, le cadre 12 pourrait également être réalisé séparément des barreaux du premier ensemble 18, ces barreaux étant rapportés sur ce cadre 12.

Par ailleurs, la grille 16 pourrait également comporter des ensembles supplémentaires de barreaux, réalisés dans d'autres matériaux différents des premier et second matériaux.

## Revendications

1. Calandre (10), notamment pour véhicule automobile, du type comportant un cadre (12) délimitant une ouverture (14) de passage d'air, et une grille (16) comprenant des premier (18) et second (20) ensembles de barreaux s'entrecroisant dans l'ouverture de passage d'air (14), **caractérisée en ce que** les barreaux du premier ensemble (18) sont réalisés en un premier matériau, et les barreaux du second ensemble (20) sont réalisés en un second matériau différent du premier matériau.

2. Calandre (10) selon la revendication 1, dans laquelle les premier et second matériaux différent notamment en ce qu'ils comportent des pigments de couleurs différentes.

3. Calandre (10) selon la revendication 1 ou 2, dans laquelle le cadre (12) est réalisé dans le premier ou le second matériau, ce cadre (12) étant de préférence venu de matière avec les barreaux du premier (18) ou second (20) ensemble.

4. Calandre (10) selon l'une quelconque des revendications 1 à 3, dans laquelle les barreaux de l'un parmi les premier (18) et second (20) ensembles sont sensiblement horizontaux, et les barreaux de l'autre parmi les premier (18) et second (20) ensembles sont sensiblement verticaux.

5. Calandre (10) selon l'une quelconque des revendications 1 à 4, dans laquelle au moins un barreau du premier (18) ou du second (20) ensemble comporte au moins une alvéole (20, 22).

6. Calandre (10) selon l'une quelconque des revendications 1 à 5, dans laquelle les barreaux des premier (18) et second (20) ensembles sont co-moulés.

7. Calandre (10) selon l'une quelconque des revendications 1 à 5, dans laquelle les barreaux du second ensemble (20) sont rapportés sur les barreaux du premier ensemble (18).

8. Procédé de fabrication d'une calandre(10), notamment pour véhicule automobile, du type comportant un cadre structurel (12) délimitant une ouverture de passage d'air (14), et une grille (16) comprenant des premier (18) et second (20) ensembles de barreaux s'entrecroisant dans l'ouverture de passage d'air (14), **caractérisé en ce qu'**il comporte une première étape de moulage des barreaux du premier ensemble (18), par injection, dans un premier moule, d'un premier matériau différent d'un second matériau dans lequel sont réalisés et les barreaux du second ensemble (20).

9. Procédé de fabrication selon la revendication 8, dans lequel le cadre (12) et les barreaux du premier ensemble (18) sont réalisés dans le même matériau, au cours de la première étape de moulage par injection.

10. Procédé de fabrication selon la revendication 8 ou 9, comportant une seconde étape de surmoulage du second matériau sur les barreaux du premier ensemble (18) de façon à former les barreaux du second ensemble (20).

11. Procédé de fabrication selon la revendication 8 ou 9, comportant une étape de moulage des barreaux du second ensemble (20), par injection, dans un second moule, du second matériau, et une étape d'assemblage des barreaux des premier (18) et second (20) ensembles, par exemple par encliquetage, vissage ou soudage.
